# EUROPÄISCHE PATENTSCHRIFT

(11) **EP 2 608 684 B1**
(45) Veröffentlichungstag und Bekanntmachung des Hinweises auf die Patenterteilung: **27.08.2014**
(21) Anmeldenummer: 11735867.1
(22) Anmeldetag: 19.07.2011
(51) Int. Cl.: A23P 1/08, A01J 25/12, A01J 27/02, A23C 19/16, A23L 1/00

(54) **VERFAHREN UND VORRICHTUNG ZUM AUFTRAG VON ZUTATEN BEI DER LEBENSMITTELHERSTELLUNG**
PROCESS AND DEVICE FOR LAMINATING INGREDIENTS IN FOOD PRODUCTION
PROCÉDÉ ET DISPOSITIF POUR REPANDRE DES INGRÉDIENTS PENDANT LA PRODUCTION DE DENRÉES ALIMENTAIRES

(30) Priorität: 25.08.2010 DE 102010035521
(43) Veröffentlichungstag der Anmeldung: 03.07.2013
(73) Patentinhaber: Hochland SE, 88178 Heimenkirch (DE)
(72) Erfinder: SCHMIDT, Sebastian, 88131 Lindau (DE)
(74) Vertreter: Braun-Dullaeus, Karl-Ulrich
(86) Internationale Anmeldenummer: PCT/EP2011/062292
(87) Internationale Veröffentlichungsnummer: WO 2012/025307

(56) Entgegenhaltungen:
- WO-A1-2006/073598
- DE-A1- 10 328 905
- DE-C- 836 138
- DE-C1- 3 803 756
- US-A- 4 626 439
- US-A- 6 117 235

## Beschreibung

Die vorliegende Erfindung betrifft ein Verfahren zum Einbringen einer sichtbaren Zutat in die Oberfläche eines als fließfähige Masse vorliegenden Lebensmittels, insbesondere einer heißen Käseschmelze.

Aus der Lebensmittelherstellung ist es seit jeher bekannt, Zutaten unter die Rohmasse des Lebensmittels zu mischen, bevor die Rohmasse der weiteren Verarbeitung zugeführt wird. Eine solche Vorgehensweise ist beispielsweise in der Wurst- oder Käseherstellung allgemein üblich. Auf diese Weise wird nicht nur mit Gewürzen sondern auch mit sichtbaren Zutaten, wie Kräuterblättchen oder Pilzscheiben, verfahren, deren Zweck im Wesentlichen darin besteht, die optische Erscheinungsform und damit die Attraktivität des Lebensmittels zu verbessern.

Im Falle von Schmelzkäse ist es bekannt, auch derartige Zutaten unter die Käseschmelze zu mischen, die dann in formgebenden Behältnissen zu Blöcken abgekühlt und letztendlich in Scheiben geschnitten wird. Da alle Zutaten, auch die Kräuterblättchen und/oder Pilzscheiben, innerhalb der Käseschmelze in beliebigen Orientierungen eingebettet waren, kommt es beim Schneiden zu einem wahllosen und wenig attraktiven Schnittbild, in dem die Zutaten kaum in ihrer Besonderheit erkennbar sind. Ein weiterer Nachteil dieses Verfahrens ist, dass es aufwendig und daher für die Herstellung von Käsescheiben in großem Umfang ungeeignet ist.

Ähnlich stellt sich die Oberfläche von Schmelzkäsescheiben dar, die hergestellt werden, indem die Zutaten direkt unter die Käseschmelze gemischt und diese dann zu Scheiben ausgewalzt wird. In diesem Fall sind die Zutaten zumeist von der Käseschmelze komplett umschlossen und erscheinen daher nur zu einem geringen Anteil und dabei in wahlloser Orientierung an der Oberfläche.

Beide Verfahren haben somit den großen Nachteil, dass die Menge der einzusetzenden Zutaten im Verhältnis zur der Menge der letztendlich an der Oberfläche sichtbaren Zutaten zu gering ist. Damit sind der Verbrauch und die Produktionskosten zu hoch, was insbesondere in den Fällen kaum hinnehmbar ist, in denen die Zutaten lediglich zur optischen Aufwertung des Produktes dienen sollen und den Geschmack kaum beeinflussen.

Die DE 836 138 C offenbart ein Verfahren zur Herstellung von Schmelzkäse, der oberflächlich mit Gewürzen bestreut ist. Der Käse wird nach dem Bestreuen verpackt und in der Verpackung oberflächlich pastuerisiert.

Aufgabe der vorliegenden Erfindung ist es nunmehr, ein Verfahren zum Einbringen einer sichtbaren Zutat in die Oberfläche eines als fließfähige Masse vorliegenden Lebensmittels, insbesondere einer heißen Käseschmelze, vorzuschlagen, das sich einfach umsetzen lässt und das die massenhafte Herstellung von optisch ansprechenden Scheiben dieses Lebensmittels ermöglicht, in denen die Zutaten als solche noch erkennbar sind. Zudem ist es Aufgabe der Erfindung eine einfache das Verfahren umsetzende Vorrichtung zu schaffen.

Diese Aufgaben werden durch ein Verfahren mit den kennzeichnenden Merkmalen des Anspruch 1 und eine Vorrichtung nach Anspruch 4 gelöst. Vorteilhafte Ausführungsformen der Erfindung sind in den jeweiligen Unteransprüchen genannt.

Der Kerngedanke der Erfindung liegt darin, zuerst die fließfähige Lebensmittelmasse, insbesondere die heiße Käseschmelze, in einem Walzenspalt zu einem Lebensmittelband zu formen, dieses Band dann oberflächlich einseitig oder auch beidseitig mit der Zutat oder den Zutaten zu bestreuen, die Zutaten mittels einer Andruckwalze etwas in der Masse zu Verhaften und das bestückte Lebensmittelband dann weiter zu verarbeiten. Dabei eignet sich das erfindungsgemäße Verfahren vor allem für solche Lebensmittel, die zunächst im heißen Zustand bei geringer Viskosität verarbeitet und dann im weiteren Verfahrensverlauf abgekühlt werden, wobei sie zu einem schnittfesten Produkt werden. Vor allem ist die erfindungsgemäße Vorgehensweise für die massenhafte Herstellung von mit sichtbaren Zutaten belegten Schmelzkäsescheiben geeignet.

Im Rahmen der Herstellung wird erfindungsgemäß die fließfähige Masse des zunächst unbestückten Lebensmittels, also insbesondere die auf eine Temperatur von über 80°C erhitzte Käseschmelze, in den von einer Führungswalze und einer Kalibrierungswalze ausgebildeten Walzenspalt eingebracht und beim Durchtritt durch den Walzenspalt zu einem Lebensmittel- respektive zu einem breiten Käseband definierter Stärke geformt. Erst hinter dem Walzenspalt aber noch in Auflage auf der Führungswalze wird die Oberfläche des Lebensmittel- respektive Käsebandes einseitig mit der Zutat oder den Zutaten bestreut, wobei für das Bestreuen eine Streuvorrichtung eingesetzt wird, die ein gleichmäßiges Bestreuen der gesamten Oberfläche ermöglicht. Bei dieser Art des Bestreuens, die sich für jegliche streufähige Zutaten unterschiedlichster Formen eignet, kommen gerade die flachen blättrigen Zutaten entsprechend flächig auf der Oberfläche zu liegen. Mit dem beschriebenen Vorgang wird das Lebensmittelband zunächst einseitig bestreut. Es kann sich aber an diese erste einseitige Bestreuung eine zweite solche einseitige Bestreuung der anderen Seite anschließen, so dass ein beidseitig bestreutes Lebensmittelband entsteht.

Das solchermaßen zunächst einseitig bestreute Lebensmittelband wird unmittelbar nachfolgend einem weiteren Walzenspalt zugeführt, der zwischen der Führungswalze, auf dem das Lebensmittelband noch aufliegt, und einer Ändruckwalze ausgebildet ist. Durch die Andruckwalze wird die Zutat insbesondere mit einstellbarem Druck ein wenig in die Oberfläche eingedrückt, wobei das Eindrücken vorteilhafterweise so geschieht, dass die Scheibendicke nicht - zumindest nicht wesentlich - verändert wird. Das Lebensmittel- respektive Käseband wird dann der weiteren Verarbeitung zugeführt.

Die weitere Verarbeitung des zunächst einseitig bestreuten Lebensmittelbandes kann ein weiteres erfindungsgemäßes "einseitiges Bestreuen" der anderen Seite des Lebensmittelbandes sein, so dass im Endeffekt ein beidseitig bestreutes Lebensmittelband entsteht. Eine solche zweiseitige Bestreuung zeigt eines der nachfolgend zu beschreibenden Ausführungsbeispiele.

Nach dem einseitigen oder zweiseitigen Bestreuen kann das Lebensmittelband einer Kühlung, zugeführt werden, bevor es letztendlich zunächst in parallele Streifen und dann in einzelne Scheiben geschnitten wird. Ein solches Formen, Kühlen und Schneiden eines Käsebandes ist in der DE 10 328 905 A1 beschrieben. Vorgehensweise Auf diese Weise entstehen fertig bestreute Käsescheiben in nur einem einzigen Arbeitsgang.

Erfindungsgemäß können verschiedene Zutaten, wie Kräuter, Pilzscheiben oder Gewürze, aufgestreut werden, wobei der Vorteil des Verfahrens besonders hervor tritt, wenn es sich um flächige respektive um blättrige Zutaten handelt, die, wie oben schon dargelegt, entsprechend flächig auf die Oberfläche aufgestreut werden. Solche Zutaten bewirken eine attraktive Oberflächengestaltung, da sie gut in ihrer für sie typischen Form sichtbar und damit für den Kunden identifizierbar sind. Dabei erlaubt das erfindungsgemäße Verfahren auch eine beidseitige Belegung des Lebensmittelbandes mit jeweils einer Zutat, so dass sich ein für den Kunden besonders attraktives Lebensmittelprodukt herstellen lässt.

Ein weiterer besonderer Vorteil der erfindungsgemäßen Vorgehensweise liegt in den verhältnismäßig geringen Produktionskosten gegenüber den bekannten Technologien. Das rührt nicht nur von der Reduzierung der Fertigungsschritte, sondern vor allem auch von dem geringeren Verbrauch an Zutaten. Schließlich muss nicht mehr das komplette Produkt mit Zutaten durchsetzt werden, wenn diese letztendlich doch nur auf der Oberfläche sichtbar sein sollen.

Dadurch, dass das Streugut nur auf der Oberfläche des Käsebandes und der späteren Einzelscheibe vorhanden ist, behält das Produkt, insbesondere die Schmelzkäsescheibe, eine hohe Eigenstabilität während der weiteren Verarbeitung und beim letztendlichen Verbrauch. Gerade im Fall einzeln zu verbrauchender Käsescheiben, die manuell von einem Stapel entnommen und beispielsweise auf einen Cheeseburger gelegt werden, ist diese hohe Eigenstabilität von unverzichtbarem Vorteil.

Wie schon dargelegt, hat sich der Einsatz der Erfindung als besonders vorteilhaft heraus gestellt, wenn die fließfähige Masse, die insbesondere eine Käseschmelze ist, zunächst eine erhöhte Verarbeitungstemperatur und eine niedrige Viskosität hat, bevor die Oberflächen des Lebensmittelbandes durch die Anlage an der Kalibrierungswalze und der Führungswalze im Verhältnis zur anfänglichen Verarbeitungstemperatur um ein wenig runter gekühlt wird, bevor die Zutat auf die etwas abgekühlte Oberfläche aufgebracht wird. Dabei kann es ausreichen, wenn die Oberflächen der Käseschmelze auf eine Temperatur gekühlt werden, die geringfügig unterhalb der zwischen 80°C und 90°C liegenden Verarbeitungstemperatur liegt, so dass die Viskosität der Käseschmelze nur entsprechend geringfügig zunimmt.

So hat sich bei Versuchen, solchermaßen bestreute Käsescheiben herzustellen, gezeigt, dass die Zutaten als Streugut auf eine klebrige Käseoberfläche gestreut werden müssen, wobei es gilt, die optimale Konsistenz der Käseschmelze an der Oberfläche zu finden. Schließlich darf die Käseschmelze einerseits nicht zu flüssig sein, damit die Zutaten nicht in der Masse versinken. Andererseits muss die Oberfläche noch weich genug sein, damit sich die Zutaten darin einbetten lassen. Ein ganz wesentlicher Vorteil des erfindungsgemäßen Verfahrens liegt nun darin, dass sich diese optimale Konsistenz an der Produktoberfläche einerseits über die Kühlung und andererseits über die Anordnung der Streuvorrichtung im Verhältnis zu den Walzen einstellen lässt. Damit können die Zutaten genau dort aufgestreut werden, wo eine im Falle der gerade zu verarbeitenden Käsemasse optimale Temperatur und Oberflächenkonsistenz vorherrscht.

Zudem wird durch das Temperieren der Kalibrierungswalze und/oder der dieser im Falle der beidseitigen Bestreuung vorgeschalteten Vorformwalze, die gleichsam die Funktion einer Kalibrierungswalze hat, gewährleistet, dass sich das Produkt von der jeweiligen Walze löst, ohne dass auf ihr Rückstände verbleiben.

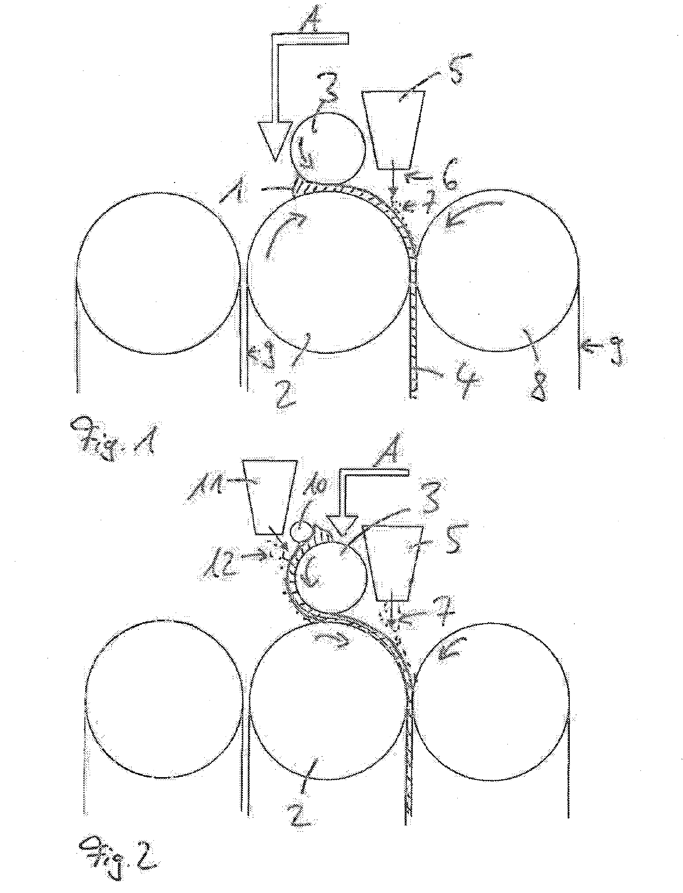

Eine besondere Ausführungsform der Erfindung ist in den Figuren 1 und 2 dargestellt und wird nachfolgend näher beschrieben. Es zeigen:
- Figur 1: eine Vorrichtung für den einseitigen Auftrag und
- Figur 2: eine Vorrichtung für den beidseitigen Auftrag.

Figur 1 zeigt schematisch eine Vorrichtung zum einseitigen Einbringen einer Zutat in die Oberfläche eines als fließfähige Masse vorliegenden Lebensmittels, insbesondere einer zwischen 80°C und 90°C heißen Käseschmelze 1, die der Vorrichtung über ein Rohrleitungssystem (schematisch dargestellt durch den Pfeil A) einem ersten Walzenpaar zugeführt wird. Das Walzenpaar wird von einer Führungswalze 2 und einer Kalibrierungswalze 3 gebildet, wobei die Kalibrierungswalze 3 einen kleineren Durchmesser als die Führungswalze 2 hat und oberhalb der Führungswalze 2 angeordnet ist. Diese Anordnung hat u.a. den Vorteil, dass die Schwerkraft zur Lenkung des Käsebandes ausgenutzt wird, so dass dieses eine geringere Neigung hat, an der Kalibrierungswalze 3 anzuhaften.

Die Oberfläche der Kalibrierungswalze 3 hat eine Antihaftbeschichtung, insbesondere aus Teflon, und ist auf eine Oberflächentemperatur von etwa 40°C gekühlt, um die Gefahr der Anhaftungen noch weiter zu reduzieren. Im Walzenspalt zwischen der Führungswalze 2 und der Kalibrierungswalze 3 wird das Käseband 4 auf eine festgelegte Stärke ausgewalzt, wobei die Weite des Walzenspaltes vorteilhafterweise einstellbar ist.

Weiterhin ist eine mit einer Zutat befüllte Streuvorrichtung 5 mit einem unmittelbar neben der Kalibrierungswalze 3 angeordneten Streuauslass 6 vorgesehen. Die Streuvorrichtung 5 ist in diesem Beispiel kann als Walzenstreuer ausgebildet. Es können aber auch Vibrationsstreuer, Linearstreuer, Bandstreuer, Bürstenstreuer oder ähnliche eingesetzt werden. Aus dem Streuauslass 6 fällt die Zutat 7 unmittelbar auf dem oberen Quadrant der Führungswalze 2 und bleibt auf der etwas abgekühlten Käseschmelze kleben. Auf diese Weise wird eine besonders gute Anhaftung ohne ein eventuelles Abrutschen der Zutat erreicht.

Neben der Führungswalze 2 ist eine Andruckwalze 8 gleichen Durchmessers vorgesehen, wobei die Führungswalze 2 und die Andruckwalze 8 jeweils ein endloses Kühlband 9 führen. Die jeweilige untere Gegenwalze ist nicht dargestellt. Das mit Zutat belegte Käseband 4 wird entsprechend zwischen den beiden Kühlbändern 9, die sich in Pfeilrichtung drehen, nach unten befördert und dabei gekühlt.

Die Kühlbänder 9 sind vertikal angeordnet, was eine Platzersparnis und einen hohen Wirkungsgrad bei der Kühlung ermöglicht. Da das Produkt im flüssigen Zustand durch die beiden anliegenden Kühlbänder beidseitig abgestützt wird und daher nicht abfließt oder sich in der Form verändert, können auch wegen ihrer Viskosität schwierig zu handhabende Produkte einfach und komfortabel bearbeitet werden. Der in seiner Weite einstellbare Walzenspalt zwischen der Führungswalze 2 und der Andruckwalze 8 kann zum Glätten der Produktoberfläche und zum Andrücken der Zutaten eingesetzt werden.

Die Ausführungsform nach Figur 2 entspricht im Prinzip der nach Figur 1, nur dass der aus Figur 1 ersichtlichen einseitigen Bestreuung eine erste einseitigen Bestreuung der anderen Seite vorgeschaltet ist. Die Kalibrierung des Käsebandes übernimmt nun eine ebenfalls mit Teflon beschichtete Kalibrierungswalze 10. Die ursprüngliche Kalibrierungswalze 3 hat nun die Funktion der Führungswalze für die erste einseitige Bestreuung. Hingegen wirkt die ursprüngliche Führungswalze 2 nun als Andruckwalze für die auf die erste Seite aufgestreute Zutat.

Außerdem ist eine zweite, ebenfalls mit einer Zutat 12 befüllte Streuvorrichtung 11 vorgesehen, wobei diese Zutat 12 nicht der Zutat 7 entsprechen muss. Die Käseschmelze wird wiederum entsprechend dem Pfeil A dem Walzenspalt zwischen Kalibrierungswalze 3 und Vorformwalze 10 zugeführt, wobei - wie dargelegt - in diesem Ausführungsbeispiel die Kalibrierungswalze 3 insofern die Rolle einer Führungswalze einnimmt, als das im ersten Walzenspalt geformte Käseband an ihr und nicht an der Vorformwalze 10 anhaftet. Der Streuauslass der Streuvorrichtung 11 mündet unmittelbar neben der Vorformwalze 10 auf dem oberen Quadrant der Kalibrierungswalze 3. Die zunächst einseitig mit der Zutat 12 bestreute und zu einem Band ausgewalzte Käseschmelze wird nun in den weiteren Walzenspalt zwischen der Kalibrierungswalze 3 und der Führungswalze 2 geführt, der in diesem Fall keine weitere Verformung des Käsebandes vornimmt. In dieser zweiten Stufe wird das Käseband entsprechend dem Ausführungsbeispiel nach Figur 1 auf der anderen Oberfläche mit einer Zutat 7 bestreut.

In beiden Fällen ist es vorteilhaft, wenn die Position des Streuauslasses der Streuvorrichtungen 5 und/oder 11 in Bezug auf die Kalibrierungswalze 3 und/oder die Vorformwalze 10 einstellbar sind. Die Streuvorrichtungen haben jeweils einen Streuauslass, der die Breite des Lebensmittelbandes einnimmt.

In den Figuren nicht dargestellt ist, dass sich die endlosen Kühlbänder 9 weiter nach unten erstrecken, wo sie das Käseband dann mit einer Endtemperatur zwischen etwa 5°C und 15°C für die weitere Verarbeitung entlassen. Dabei besteht die weitere Verarbeitung zunächst in einem Längsschneiden des breiten Bandes in parallele Streifen, die dann ein einem weiteren Schritt zu einzelnen Scheiben quer geschnitten werden, wie es in der DE 10 328 905 A1 offenbart ist.

## Patentansprüche

1. Verfahren zum Einbringen einer sichtbaren Zutat (7, 12) in die Oberfläche eines als fließfähige Masse vorliegenden Lebensmittels, insbesondere einer heißen Käseschmelze (1),
wobei die fließfähige Masse des unbestückten Lebensmittels in den Walzenspalt zwischen einer Führungswalze (2) und einer parallel angeordneten Kalibrierungswalze (3) eingebracht und zu einem Lebensmittelband definierter Stärke geformt wird,
wobei das Lebensmittelband hinter dem Walzenspalt während der Auflage auf der Führungswalze (2) mittels einer Streuvorrichtung (5) einseitig mit der Zutat (7) bestreut wird,
wobei das einseitig bestreute Lebensmittelband (4) einem weiteren Walzenspalt zugeführt wird, der zwischen der Führungswalze (2) und einer Andruckwalze (8) ausgebildet wird,
wobei die Zutat (7) mittels der Andruckwalze (8) in die Oberfläche eingedrückt wird und
wobei das Lebensmittelband, insbesondere nach einer Kühlung, in einzelne Scheiben geschnitten wird,

2. Verfahren nach Anspruch 1,
**dadurch gekennzeichnet,**
**dass** die fließfähige Masse, insbesondere die Käseschmelze (1), eine erhöhte Verarbeitungstemperatur hat und dass die Oberflächen des Lebensmittelbandes durch die Anlage an der Kalibrierungswalze (3) und der Führungswalze (2) im Verhältnis zur anfänglichen Verarbeitungstemperatur gekühlt wird, wobei die Zutat (7) auf die solchermaßen gekühlte Oberfläche aufgebracht wird.

3. Verfahren nach Anspruch 2,
**dadurch gekennzeichnet,**
**dass** die Oberflächen der Käseschmelze auf eine Temperatur geringfügig unterhalb der Verarbeitungstemperatur gekühlt werden, wobei die Viskosität des Schmelzkäses entsprechend nur geringfügig zunimmt.

4. Vorrichtung zum Einbringen einer Zutat in die Oberfläche eines als fließfähige Masse vorliegenden Lebensmittels, insbesondere zur Durchführung des Verfahrens nach einem der vorherigen Ansprüche,
**gekennzeichnet durch**
ein Walzenpaar, das von einer Führungswalze (2) und einer Kalibrierungswalze (3) kleineren Durchmessers gebildet wird, wobei die Kalibrierungswalze (3) oberhalb der Führungswalze (2) angeordnet ist, wobei eine die Zutat (7) ausgebende Streuvorrichtung (5) mit einem neben der Kalibrierungswalze (3) angeordneten Streuauslass (6) vorgesehen ist, der auf dem oberen Quadrant der Führungswalze (2) mündet.

5. Vorrichtung nach Anspruch 4,
**dadurch gekennzeichnet, dass** neben der Führungswalze (2) eine Andruckwalze (8) gleichen Durchmessers vorgesehen ist, wobei die Führungswalze (2) und die Andruckwalze (8) jeweils ein Kühlband (9) führen.

6. Vorrichtung nach Anspruch 4 oder 5,
**dadurch gekennzeichnet, dass** oberhalb der Kalibrierungswalze (3) eine Vorformwalze (10) kleineren Durchmessers angeordnet ist, wobei eine eine erste Zutat (12) ausgebende erste Streuvorrichtung (11) mit einem neben der Vorformwalze (10) angeordneten Streuauslass vorgesehen ist, der auf dem oberen Quadrant der Kalibrierungswalze (3) mündet.

7. Vorrichtung nach einem der Ansprüche 4 bis 6,
**dadurch gekennzeichnet, dass** die Position des Streuauslasses in Bezug auf die Kalibrierungswalze (3) und/oder die Vorformwalze (10) einstellbar ist.

8. Vorrichtung nach einem der Ansprüche 4 bis 7,
**dadurch gekennzeichnet, dass** die Kalibrierungswalze (3) und die Vorformwalze (10) temperiert, insbesondere gekühlt, sind und eine Walzenoberfläche mit einer Antihaftbeschichtung, insbesonderer aus Teflon, aufweisen.

9. Vorrichtung nach einem der Ansprüche 4 bis 8,
**dadurch gekennzeichnet, dass** die Temperatur der Kalibrierungswalze (3) und/oder der Vorformwalze (10) einstellbar ist.

10. Vorrichtung nach einem der Ansprüche 4 bis 9,
**dadurch gekennzeichnet, dass** die Streuvorrichtung (5,11) ein Streuer mit einstellbarer Streumenge ist, dessen Streuauslass die Breite des Lebensmittelbandes einnimmt.

## Claims

1. A method for introducing a visible ingredient (7, 12) into the surface of a food, which is present as a flowable mass, in particular a hot processed cheese (1),
wherein the flowable mass of the non-equipped food is fed into the roller gap between a guide roller (2) and a calibration roller (3) disposed parallel thereto, and is shaped into a food strip having a defined thickness,
wherein the food strip is sprinkled on one side with the ingredient (7) by way of a sprinking device (5) downstream of the roller gap while lying on the guide roller (2),
wherein the food strip (4), which has been sprinkled on one side, is fed to a further roller gap, which is formed between the guide roller (2) and a pressure roller (8),
wherein the ingredient (7) is pressed into the surface via the pressure roller (8) and
wherein the food strip is cut into individual slices, in particular after cooling.

2. Method according to claim 1,
**characterized in**
**that** the flowable mass, in particular the processed cheese (1), has an elevated processing temperature and that the surfaces of the food strip is cooled relative to the initial processing temperature by lying on the calibration roller (3) and the guide roller (2), wherein the ingredient (7) is applied onto the thusly cooled surface.

3. Method according to claim 2,
**characterized in**
the surfaces of the processed cheese are cooled to a temperature slightly below the processing temperature, wherein the viscosity of the processed cheese therefore increases only slightly.

4. A device for introducing an ingredient into the surface of a food present as a flowable mass, in particular for implementing the method according to one of the preceding claims,
**characterized by**
a roller pair formed of a guide roller (2) and a calibration roller (3) having a smaller diameter, wherein the calibration roller (3) is disposed above the guide roller (2), wherein a sprinkling device (5) dispensing the ingredient (7) is equipped with a sprinkling outlet (6) disposed next to the calibration roller (3), the sprinkling outlet leading onto the upper quadrant of the guide roller (2).

5. Device according to claim 4,
**characterized in**
**that** disposed next to the guide roller (2) is a pressure roller (8) having the same diameter, wherein the guide roller (2) and the pressure roller (8) each guide a cooling belt (9).

6. Device according to claim 4 or 5,
**characterized in**
disposed above the calibration roller (3) is a preshaping roller (10) having a smaller diameter, wherein a first sprinkling device (11), which dispenses a first ingredient (12), is equipped with a sprinkling outlet disposed next to the preshaping roller (10), the sprinkling outlet leading onto the upper quadrant of the calibration roller (3).

7. Device according to any of claims 4 to 6,
**characterized in**
**that** the position of the sprinkling outlet relative to the calibration roller (3) and/or the preshaping roller (10) is adjustable.

8. Device according to any of claims 4 to 7,
**characterized in**
**that** the calibration roller (3) and the preshaping roller (10) are tempered, in particular cooled, and comprise a roller surface having a non-stick coating, in particular made of teflon.

9. Device according to any of claims 4 to 8,
**characterized in**
**that** the temperature of the calibration roller (3) and/or the preshaping roller (10) is adjustable.

10. Device according to any of claims 4 to 9,
**characterized in**
**that** the sprinkling device (5, 11) is a sprinkler having an adjustable sprinkling quantity, the sprinkling outlet of which covers the width of the food strip.

## Revendications

1. Procédé destiné à introduire un ingrédient (7, 12) visible dans la surface d'un produit alimentaire présent sous la forme d'une masse coulante, notamment d'un fromage fondu (1) chaud,
lors duquel on introduit la masse coulante du produit alimentaire non garni dans le pincement entre un cylindre de guidage (2) et un cylindre de calibrage (3) placé en parallèle et on la moule en une bande de produit alimentaire d'épaisseur définie,
lors duquel derrière le pincement entre cylindres, pendant l'appui sur le cylindre de guidage (2), au moyen d'un dispositif saupoudreur (5), on saupoudre unilatéralement la bande de produit alimentaire avec l'ingrédient (7),
lors duquel on amène la bande de produit alimentaire (4) unilatéralement saupoudrée vers un pincement entre cylindres supplémentaire qui est conçu entre le cylindre de guidage (2) et un cylindre presseur (8),
lors duquel, au moyen du cylindre presseur (8), on presse l'ingrédient (7) dans la surface,
lors duquel on coupe la bande de produit alimentaire en tranches individuelles, notamment après un refroidissement.

2. Procédé selon la revendication 1,
**caractérisé en ce**
**que** la masse coulante, notamment le fromage fondu (1) présente une température de mise en oeuvre élevée et en ce qu'on refroidit les surfaces de la bande de produit alimentaire par l'appui sur le cylindre de calibrage (3) et sur le cylindre de guidage (2) par rapport à la température initiale de mise en oeuvre, alors qu'on applique l'ingrédient (7) sur la surface ainsi refroidie.

3. Procédé selon la revendication 2,
**caractérisé en ce**
**qu'**on refroidit les surfaces du fromage fondu à une température légèrement inférieure à la température de mise en oeuvre, la viscosité du fromage fondu n'augmentant que légèrement en conséquence.

4. Dispositif destiné à introduire un ingrédient dans la surface d'un produit alimentaire présent sous la forme d'une masse coulante, notamment pour la réalisation du procédé selon l'une quelconque des revendications précédentes,
**caractérisé par**
une paire de cylindres qui est formée par un cylindre de guidage (2) et un cylindre de calibrage (3) de diamètre plus petit, le cylindre de calibrage (3) étant placé au-dessus du cylindre de guidage (2), un dispositif saupoudreur (5) distribuant l'ingrédient (7), avec une sortie de saupoudrage (6) placée à côté du cylindre de calibrage (3) étant prévu qui débouche sur le quadrant supérieur du cylindre de guidage (2).

5. Dispositif selon la revendication 4,
**caractérisé en ce**
**qu'**à côté du cylindre de guidage (2) est prévu un cylindre presseur (8) de diamètre identique, le cylindre de guidage (2) et le cylindre presseur (8) guidant chacun une bande de refroidissement (9).

6. Dispositif selon la revendication 4 ou 5,
**caractérisé en ce**
**qu'**au-dessus du cylindre de calibrage (3) est placé un cylindre de préformage (10) de diamètre plus petit, un premier dispositif saupoudreur (11) qui distribue un premier ingrédient (12) avec une sortie de saupoudrage placée à côté du cylindre de préformage (10) étant prévu, qui débouche sur le quadrant supérieur du cylindre de calibrage (3).

7. Dispositif selon l'une quelconque des revendications 4 à 6,
**caractérisé en ce**
**que** la position de la sortie de saupoudrage en rapport au cylindre de calibrage (3) et/ou au cylindre de préformage (10) est réglable.

8. Dispositif selon l'une quelconque des revendications 4 à 7,
**caractérisé en ce**
**que** le cylindre de calibrage (3) et le cylindre de préformage (10) sont tempérés, notamment refroidis et comportent une surface de cylindre avec un revêtement antiadhésif, notamment en téflon.

9. Dispositif selon l'une quelconque des revendications 4 à 8,
**caractérisé en ce**
**que** la température du cylindre de calibrage (3) et/ou du cylindre de préformage (10) est réglable.

10. Dispositif selon l'une quelconque des revendications 4 à 9,
**caractérisé en ce**
**que** le dispositif saupoudreur (5, 11) est un saupoudreur à quantité de saupoudrage réglable, dont la sortie de saupoudrage occupe la largeur de la bande de produit alimentaire.
